# FASCICULE DE BREVET EUROPEEN

(11) **EP 1 594 816 B1**
(45) Date de publication et mention de la délivrance du brevet: **22.11.2006**
(21) Numéro de dépôt: 04711393.1
(22) Date de dépôt: 16.02.2004
(51) Int. Cl.: C04B 35/80, C04B 35/573

(54) **PROCEDE DE SILICIURATION DE MATERIAUX COMPOSITES THERMOSTRUCTURAUX ET PIECES TELLES QU OBTENUES PAR LE PROCEDE**
VERFAHREN ZUR SILIZIERUNG VON THERMOSTRUKTURELLEN VERBUNDWERKSTOFFEN UND SO HERGESTELLTE TEILE
METHOD OF SILICONISING THERMOSTRUCTURAL COMPOSITE MATERIALS AND PARTS THUS PRODUCED

(30) Priorité: 17.02.2003 FR 0301871
(43) Date de publication de la demande: 16.11.2005
(73) Titulaire: Snecma Propulsion Solide, 33187 Le Haillan Cedex (FR)
(72) Inventeur: THEBAULT, Jacques, F-33200 Bordeaux (FR); PAILLER, René, F-33610 Cestas (FR); ICHARD, Jean-Christophe, F-33700 Merignac (FR)
(74) Mandataire: Joly, Jean-Jacques
(86) Numéro de dépôt international: PCT/FR2004/000345
(87) Numéro de publication internationale: WO 2004/076381

(56) Documents cités:
- EP-A- 0 835 853
- US-A1- 2001 033 038

## Description

### Arrière-plan de l'invention

L'invention concerne la siliciuration de matériaux composites thermostructuraux.

Les matériaux composites thermostructuraux sont connus pour leurs bonnes propriétés mécaniques et leur capacité à conserver ces propriétés à température élevée. Ces matériaux sont typiquement les composites carbone/carbone (C/C) à renfort fibreux en fibres de carbone et matrice carbone et les composites à matrice céramique (CMC) à renfort fibreux en fibres réfractaires (notamment fibres en carbone ou céramique) et à matrice céramique ou à matrice mixte C/céramique (par exemple à matrice en carbure de silicium SiC ou à matrice mixte C/SiC).

Les pièces en matériau C/C ou CMC sont réalisées par élaboration d'une structure fibreuse, ou préforme, ayant une forme voisine de la pièce à réaliser, et densification de la préforme par la matrice carbone ou céramique. La densification peut être effectuée par voie liquide ou par voie gazeuse. La voie liquide consiste à imprégner la préforme par une composition liquide contenant un précurseur de la matrice, typiquement une résine. La transformation du précurseur est réalisée par traitement thermique, qui produit un coke par pyrolyse de la résine. La voie gazeuse consiste à réaliser une infiltration chimique en phase vapeur. La préforme est placée dans un four dans lequel est introduite une phase gazeuse réactionnelle. Les conditions de pression et de température dans le four sont réglées pour permettre une diffusion de la phase gazeuse au sein de la préforme fibreuse et la formation d'un dépôt de matrice sur les fibres par décomposition d'un constituant de la phase gazeuse ou réaction entre plusieurs constituants. Ces procédés de densification par voie liquide et par voie gazeuse, qui peuvent être associés, sont bien connus en eux-mêmes.

Quel que soit le procédé de fabrication utilisé, les matériaux composites thermostructuraux présentent une porosité résiduelle formée de pores plus ou moins gros (macroporosités et microporosités) intercommunicants.

Il a été proposé de compléter la densification des matériaux composites thermostructuraux par siliciuration, c'est-à-dire par introduction de silicium en fusion. Le but est de modifier les caractéristiques thermomécaniques des matériaux, par exemple augmenter la conductivité thermique ou rendre les matériaux plus étanches et/ou de diminuer le coût de densification finale, le procédé classique par voie liquide ou voie gazeuse pouvant alors ne pas être poursuivi jusqu'à obtention de la densité maximale possible par ce procédé.

Selon la nature du matériau composite, la siliciuration peut être réactive ou non. Un exemple de siliciuration réactive, comme décrit notamment dans US 4 275 095, est l'imprégnation par du silicium en fusion d'un matériau composite dont la matrice comprend du carbone au moins dans une phase externe de matrice, le silicium réagissant alors avec le carbone pour former du carbure de silicium. Un exemple de siliciuration non réactive est l'imprégnation par du silicium en fusion d'un matériau composite dont la matrice est formée de carbure de silicium au moins dans une phase externe de matrice, c'est-à-dire un matériau composite dont la surface géométrique externe et la surface des pores communiquant avec l'extérieur est en carbure de silicium.

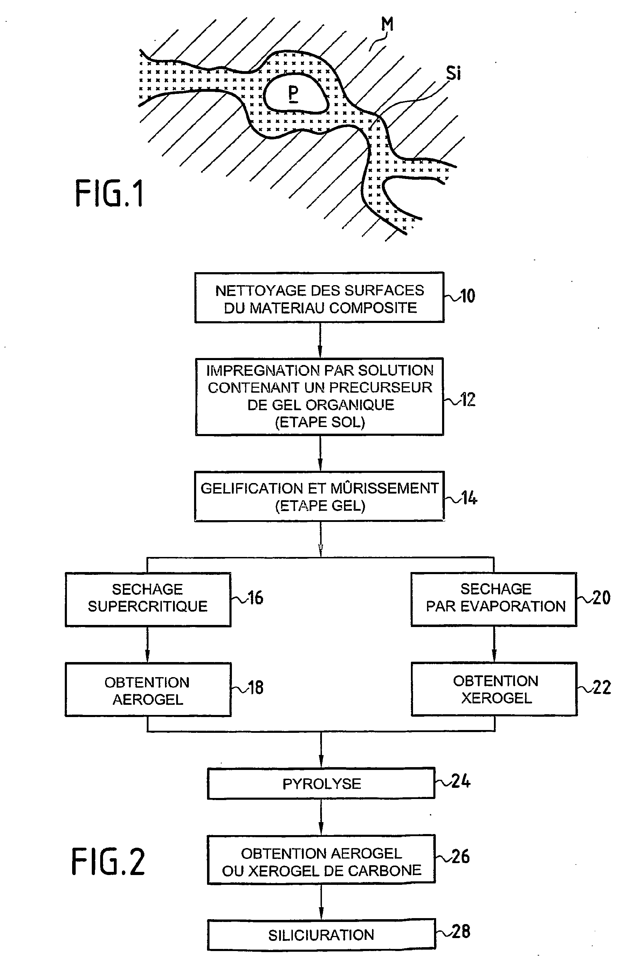

Le silicium en fusion est très fluide et possède un fort pouvoir mouillant notamment vis-à-vis de surfaces en carbone ou en carbure de silicium. Lorsqu'un matériau composite thermostructural est imprégné par du silicium à l'état liquide, celui-ci progresse dans le réseau de porosités du matériau en suivant la surface des pores. Comme le montre très schématiquement la figure 1, les microporosités et passages étroits ou étranglements du matériau M sont comblés mais non les macroporosités car le silicium (Si) s'écoule le long de leurs surfaces. Le remplissage de la porosité est donc aléatoire, ce qui ne permet pas de contrôler la diffusivité thermique et l'étanchéité. En outre, des poches de gaz occlus sont formées constituant des pores fermés inaccessibles, tels que P.

Des procédés ont été proposés pour combler en partie la porosité du matériau composite avant infiltration par du silicium en fusion.

Ainsi, il a été proposé dans le document EP 0 835 853 d'imprégner le matériau par une résine organique et de réaliser un traitement thermique de pyrolyse de la résine. Toutefois, les grains de carbone (coke de résine) obtenus se logent non seulement dans les macroporosités, dont elles obturent partiellement le volume, mais aussi dans les microporosités ou dans des étranglements du réseau poreux. Dans ces derniers cas, lors de la siliciuration, le silicium réagit avec le carbone des grains, ce qui provoque une augmentation du volume de ceux-ci et une obturation de porosité qui bloque le passage du silicium. Il en résulte une siliciuration irrégulière. De plus, subsiste, en particulier dans les macroporosités, une phase carbone sensible à l'oxydation formée par les grains de coke de résine non siliciurés ou insuffisamment siliciurés.

Il a aussi été proposé dans le document US 5 865 922 d'imprégner le matériau composite thermostructural par une résine à relativement fort taux de coke et un agent porogène. Ce dernier permet la formation d'une mousse avant polymérisation de la résine et pyrolyse donnant un résidu de carbone poreux qui est ensuite imprégné par le silicium. Ce procédé ne permet pas non plus de garantir un remplissage homogène de la porosité initiale du matériau composite par la siliciuration. Lors de la formation de la mousse, la résine peut refluer hors du matériau, d'où un taux de résine variable dans le matériau, et une porosité irrégulière du résidu poreux résultant de la pyrolyse de la résine. De plus, la transformation en mousse peut être irrégulière, avec formation de grains de résidus de carbone relativement gros non siliciurés intégralement, et formation de porosités fermées dans la mousse, inaccessibles au silicium.

### Objet et résumé de l'invention

La présente invention a pour but de proposer un procédé de traitement de matériau composite thermostructural poreux permettant de réaliser une siliciuration régulière dans toute la porosité du matériau, et ce de façon maîtrisable et reproductible.

Ce but est atteint grâce à un procédé du type comprenant l'imprégnation du matériau composite par une phase de type silicium en fusion,
procédé selon lequel, conformément à l'invention, avant imprégnation par la phase de type silicium, on forme, au sein de la porosité du matériau composite, un aérogel ou un xérogel constitué d'un précurseur de matériau réfractaire et on transforme le précurseur par pyrolyse pour obtenir un aérogel ou un xérogel en matériau réfractaire.

Avantageusement, l'aérogel ou le xérogel en précurseur de matériau réfractaire est formé par imprégnation du matériau composite par une composition contenant au moins un composé organique, organométalloïdique ou organométallique en solution, et gélification in situ.

Selon un mode particulier de mise en oeuvre du procédé, avant imprégnation par une phase de type silicium, on répète plusieurs fois les étapes d'imprégnation par une composition contenant au moins un composé organique, organométalloïdique ou organométallique en solution, et de gélification in situ.

Selon un mode de mise en oeuvre du procédé conforme à l'invention, on forme au sein de la porosité du matériau composite un aérogel ou xérogel constitué d'un matériau organique précurseur de carbone, lequel, après pyrolyse, donne un aérogel ou xérogel de carbone.

L'aérogel ou xérogel organique peut être formé par imprégnation du matériau composite par une composition contenant un précurseur de résine organique en solution.

Les aérogels ou xérogels organiques aptes à fournir des aérogels ou xérogels de carbone après pyrolyse sont bien connus. On pourra se référer notamment à un article de L. Kocon dans la publication "Revue Scientifique et Technique de la Direction des Applications Militaires", N° 24, 3/2001, p. 30-140 intitulé "Céramiques Poreuses, Aérogels de silice et de carbone", à un article de R. Préticévic et al. dans la publication "Carbon" 39 (2001) de "Elseviers Science Ltd.", p. 857-867, intitulé "Planar fibre reinforced carbon aerogels for application in PEM fuel cells", et au document US 4 997 804.

Selon un autre mode de mise en oeuvre du procédé conforme à l'invention, on forme au sein de la porosité du matériau composite un aérogel ou xérogel constitué d'un précurseur de matériau réfractaire de type céramique, lequel, après pyrolyse, donne un aérogel ou xérogel en céramique. Par matériau réfractaire "de type céramique", on entend ici un matériau réfractaire autre que le carbone, notamment de type carbure, nitrure, borure ou oxyde.

L'aérogel ou xérogel en matériau précurseur de céramique peut notamment être formé par imprégnation du matériau composite par une composition contenant un composé organosilicié en solution, par exemple un composé organosilicié précurseur du carbure de silicium tel qu'un polycarbosilane.

La formation d'aérogels en matériau réfractaire de type oxyde est décrite dans l'article de L. Kocon identifié ci-avant.

La siliciuration du matériau composite est réalisée après formation d'au moins un aérogel en matériau réfractaire.

Par "siliciuration", on entend ici une imprégnation du matériau composite thermostructural par une phase de type silicium en fusion pénétrant dans la porosité du matériau composite, la "phase de type silicium" étant constituée :
- soit par du silicium et/ou du germanium (c'est-à-dire du silicium seul, du germanium seul ou un mélange de silicium et de germanium en toutes proportions),
- soit majoritairement par du silicium et/ou du germanium allié avec au moins un métal ou un autre métalloïde.

Dans ce dernier cas, le métal ou autre métalloïde peut être choisi notamment parmi le fer, le cobalt, le titane, le zirconium, le molybdène, le vanadium, le carbone ou le bore selon les propriétés particulières à conférer au matériau composite thermostructural après siliciuration ou pour éviter une dissolution dans la phase de type silicium d'éléments constitutifs de la matrice du matériau composite.

Un aérogel ou xérogel organique, organométalloïdique ou organométallique présente une structure arachnéenne qui, après pyrolyse, donne un réseau tridimensionnel de matériau réfractaire très poreux formé de particules très fines. Ces particules sont des arrangements filamentaires nanoparticulaires, c'est-à-dire dont le diamètre est de l'ordre de la dizaine de nm ; il s'agit d'une structure particulière nanométrique qui donne à l'aérogel ou xérogel une caractéristique de nanomatériau et qui est tout à fait différente de la structure d'une mousse telle qu'envisagée dans le document US 5 865 922.

Le réseau formé par l'aérogel ou le xérogel réalise un fractionnement de la porosité initiale du matériau composite tel que l'on obtient une porosité régulière, intercommunicante, sans formation de particules susceptibles de provoquer des obturations de la porosité nuisibles à la progression de la phase de type silicium. Il en résulte une siliciuration régulière.

En outre, et c'est un résultat remarquable apporté par l'invention, dans le cas d'un aérogel ou xérogel de carbone, la finesse des particules de carbone, de taille nanométrique, fait qu'elles sont intégralement siliciurées, de sorte qu'après siliciuration, il ne subsiste pas de phase carbone oxydable issue de l'aérogel ou xérogel de carbone et on obtient un nano-réseau de particules de carbure dispersées dans la phase de type silicium.

Un procédé conforme à l'invention peut aussi être utilisé pour la liaison de pièces en matériau composite thermostructural entre elles. Après avoir amené côte à côte des surfaces respectives des pièces à relier, un procédé tel que défini ci-avant peut être mis en oeuvre comprenant la formation d'un aérogel ou d'un xérogel en matériau réfractaire au sein de la porosité du matériau composite des pièces et dans l'interface ou joint entre lesdites surfaces des pièces, et une siliciuration par imprégnation par une phase de type silicium.

L'utilisation d'un aérogel ou xérogel de matériau réfractaire, caractéristique du procédé conforme à l'invention, s'avère donc particulièrement avantageuse pour la réalisation d'une densification régulière par siliciuration, permettant d'obtenir des caractéristiques homogènes et reproductibles en termes, notamment, de conductibilité thermique, d'étanchéité, de propriétés tribologiques, ...

Dans le cas notamment d'une application à l'étanchéification de matériaux composites thermostructuraux, la siliciuration peut être suivie d'une étape de formation d'un revêtement de surface en un matériau céramique, par exemple par dépôt ou infiltration chimique en phase vapeur.

Avec un aérogel ou xérogel de carbone, la siliciuration présente un caractère réactif vis-à-vis de l'aérogel ou xérogel transformant celui-ci en matériau réfractaire nano-particulaire de type céramique.

Par contre, avec un aérogel ou xérogel en matériau réfractaire de type céramique, la siliciuration peut être non réactive vis-à-vis de l'aérogel ou xérogel.

Dans les deux cas, et selon un autre aspect de l'invention, une pièce en matériau thermostructural siliciuré est obtenue dans laquelle le matériau composite thermostructural comprend une phase de type silicium renfermant au moins un aérogel ou xérogel, c'est-à-dire un réseau nanométrique, en matériau réfractaire de type céramique.

Selon une application particulière, la pièce en matériau composite thermostructural siliciuré est une pièce de friction comprenant un matériau composite carbone/carbone dont la porosité est au moins partiellement comblée par une phase de silicium renfermant un réseau nanométrique de carbure de silicium. On peut alors réaliser un ensemble de disques stators et rotors d'un frein d'avion multidisques au moyen de telles pièces de friction en matériau composite C/C siliciuré en forme de disques.

En variante, dans un ensemble de disques stators et rotors d'un frein d'avion, on pourra associer des disques rotors en matériau composite C/C siliciuré conformément à l'invention avec des disques stators en matériau composite C/C non siliciuré, ou inversement.

Selon une autre application particulière, des pièces en matériau composite thermostructural siliciuré obtenues par un procédé conforme à l'invention sont des électrodes, en particulier des anodes et/ou cathodes et/ou grilles accélératrices, pour des moteurs ioniques ou plasmiques, ou encore des plaques bipolaires pour piles à combustible.

### Brève description des dessins

L'invention sera mieux comprise à la lecture de la description faite ci-après, à titre indicatif mais non limitatif, en référence aux dessins annexés sur lesquels :
- la figure 1, déjà décrite, montre très schématiquement le résultat obtenu par siliciuration réalisée sur un matériau composite thermostructural sans fractionnement de la porosité de celui-ci ;
- la figure 2 est un ordinogramme montrant des étapes successives d'un mode de réalisation d'un procédé selon l'invention ;
- les figures 3 à 8 illustrent schématiquement différents modes de réalisation de l'imprégnation d'une pièce en matériau composite thermostructural par une phase de type silicium en fusion ;
- les figures 9 et 10 sont des ordinogrammes relatifs à des variantes du mode de mise en oeuvre du procédé de la figure 2 ;
- la figure 11 illustre très schématiquement une application d'un procédé conforme à l'invention pour la liaison par siliciuration de pièces en matériau composite thermostructural ;
- les figures 12 et 13 sont des vues photographiques prises en microscopie optique montrant un réseau nanométrique de particules céramiques résultant de la siliciuration complète d'un xérogel et d'un aérogel de carbone par du silicium et situé dans une matrice de type silicium, dans la porosité d'un matériau composite thermostructural ; et
- la figure 14 est une vue photographique prise en microscopie optique montrant une phase de silicium dans la porosité d'un matériau composite thermostructural, sans introduction préalable de xérogel ou d'aérogel dans cette porosité.

### Description détaillée de modes de réalisation

La figure 2 montre les étapes successives d'un mode de réalisation d'un procédé conforme à l'invention. Le procédé est mis en oeuvre sur une pièce en matériau composite thermostructural, notamment un composite C/C ou un CMC, comprenant un renfort fibreux et une matrice densifiant le renfort fibreux. Le matériau composite thermostructural présente une porosité formée de pores de tailles plus ou moins grande qui communiquent entre eux. La porosité est plus ou moins importante selon le degré de densification du matériau composite.

L'objet du procédé est de réaliser une siliciuration de la pièce en matériau composite thermostructural afin de conférer des propriétés particulières au matériau, telles que conductivité thermique, étanchéité ou caractéristiques tribologiques. L'objet du procédé est aussi de réaliser une étape finale de densification du matériau dans des conditions plus économiques que celles qui devraient être mises en oeuvre pour compléter la densification par voie liquide classique ou par infiltration chimique en phase vapeur.

Une première étape éventuelle 10 du procédé de la figure 2 consiste à réaliser un traitement de nettoyage des surfaces accessibles du matériau composite, notamment lorsque celui-ci comprend une phase de matrice en carbure de silicium (SiC) à la surface de laquelle un film d'oxyde, notamment silice (SiO₂) a pu se former. Il est souhaitable d'éliminer le film de silice pour favoriser le mouillage des surfaces des pores lors de la siliciuration ultérieure. A cet effet, on peut réaliser un traitement thermique qui provoque la formation de gaz SiO et CO par réaction entre SiO₂ et SiC. La température du traitement thermique peut être abaissée en réalisant le traitement sous pression réduite. On peut également attaquer le film d'oxyde SiO₂ (ou SiOC) par un gaz réactif à chaud tel que du dioxyde de carbone CO₂ ou de l'hexafluorure de soufre (SF₆). Le nettoyage des surfaces accessibles du matériau composite peut aussi être effectué par attaque acide par exemple par acide fluorhydrique HF et/ou acide nitrique HNO₃.

Ensuite, le matériau composite thermostructural est imprégné par une solution dont les constituants permettent, après gélification, mûrissement et séchage, d'obtenir un aérogel ou xérogel organique (étape sol 12).

A titre d'exemple, pour l'étape sol, on peut utiliser une solution aqueuse contenant du résorcinol et du formaldéhyde ainsi qu'un catalyseur éventuel tel que du carbonate de sodium. Différents exemples de solutions sont donnés dans le document US 4 997 804. D'autres précurseurs de gels organiques dans la famille des hydroxybenzènes peuvent être utilisés tel que le phloroglucinol en solution dans l'eau et associé à un réactif tel que le formaldéhyde.

La gélification (polymérisation) (étape gel 14) est réalisée in-situ par chauffage modéré, la température devant rester inférieure à celle d'évaporation du solvant. Dans le cas d'une solution aqueuse, la température est généralement comprise entre 50°C et 100°C. Dans l'exemple précité, la gélification consiste en une réaction entre le résorcinol et le formaldéhyde. La gélification est suivie d'une étape de mûrissement dont la durée peut couvrir un à plusieurs jours, le matériau étant laissé à la température de gélification.

On obtient alors un réseau tridimensionnel (3D) arachnéen d'un gel organique tridimensionnel emprisonnant le solvant par capillarité.

On notera que des solvants autres que l'eau peuvent être utilisés dans la mesure où ils constituent des solvants des constituants de la composition d'imprégnation, mais non des solvants du polymère obtenu après gélification.

On procède ensuite à l'élimination du solvant par séchage dans des conditions permettant d'éviter un effondrement du réseau 3D en dépit des forces capillaires s'exerçant sur les constituants filamentaires du gel.

Le séchage peut être réalisé en portant le gel dans des conditions supercritiques pour le solvant (étape 16) par augmentation de la pression puis de la température pour se situer au-delà du point critique puis en éliminant le solvant à l'état hyperfluide par décompression isotherme, l'élimination étant ainsi réalisée sans ébullition. Après refroidissement, on obtient un gel sec sous forme d'une structure 3D très poreuse, ou aérogel (étape 18). Le cas échéant, on peut procéder à un échange préalable de solvant pour remplacer le solvant de la composition d'imprégnation par un autre solvant qui se prête bien au séchage supercritique.

En variante, le séchage peut être réalisé de façon contrôlée par évaporation lente (étape 20). Par exemple, après gélification et mûrissement en atmosphère confinée, le matériau composite peut être simplement remis à l'air pour évaporation du solvant. On obtient alors un gel sec sous forme d'une structure 3D poreuse, ou xérogel (étape 22).

On notera que le séchage supercritique permet de conférer aux aérogels une structure non fissurée en comparaison avec les xérogels qui peuvent présenter des fissures. Celles-ci peuvent être provoquées par des retraits du gel au sein des pores, la liaison entre gel et paroi de pore étant plus forte que la résistance à rupture au sein du gel. Ces fissures peuvent présenter un intérêt lors de la siliciuration car elles offrent des chemins d'accès à la phase de type silicium en fusion dans le volume du xérogel.

L'aérogel ou xérogel obtenu est pyrolysé (étape 24). Cela est réalisé en élevant la température au-delà d'environ 600°C, par exemple entre 600°C et 2000°C, voire au-delà, sous atmosphère de gaz neutre tel qu'azote ou argon ou sous vide. On obtient alors un aérogel ou xérogel de carbone (étape 26).

L'étape suivante 28 consiste en une siliciuration. Comme indiqué plus haut, par siliciuration, on entend ici l'imprégnation de la porosité du matériau composite thermostructural par du silicium et/ou du germanium en fusion seul ou allié à au moins un autre élément, de type métal ou métalloïde, le silicium et/ou germanium restant alors majoritaire(s).

En vue de la siliciuration, la pièce en matériau composite est portée à une température par exemple d'environ 1400°C à 1500°C. Cette montée en température peut être mise à profit pour réaliser la pyrolyse de l'aérogel ou xérogel organique (étape 26 ci-dessus).

L'imprégnation du matériau composite par la phase de type silicium peut être réalisée par différents moyens connus. Plusieurs seront maintenant décrits dans le cas où la phase de type silicium est constituée par du silicium.

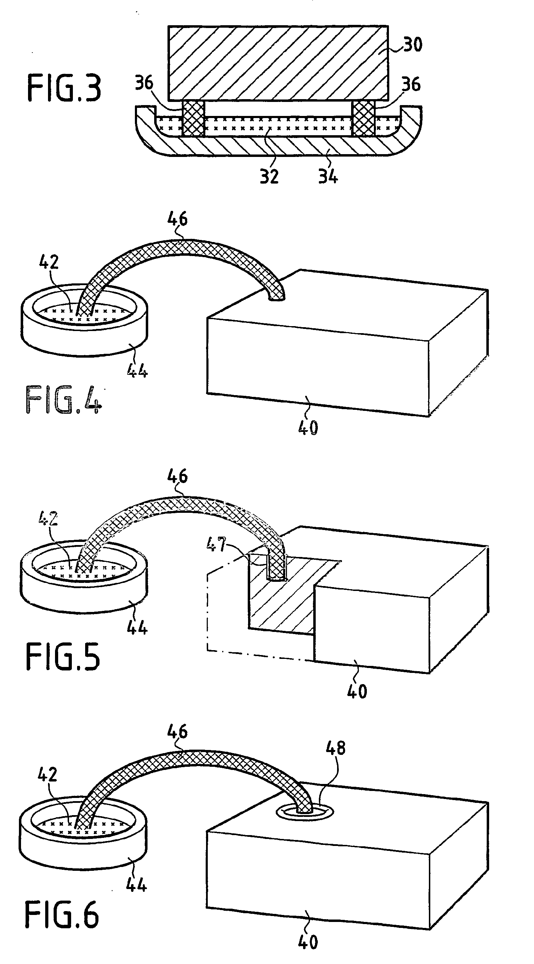

Un premier moyen (figure 3) consiste à disposer la pièce 30 en matériau composite thermostructural à imprégner munie de l'aérogel ou de xérogel de carbone au-dessus de la surface de silicium en fusion 32 contenu dans un creuset 34. La pièce est supportée par des plots 36, par exemple en graphite poreux, qui reposent sur le fond du creuset et alimentent la pièce en silicium fondu par capillarité.

Un deuxième moyen (figure 4) consiste à placer la pièce 40 à proximité d'un creuset 44 contenant du silicium 42 en fusion et à utiliser, comme moyen de transport, un drain 46 dont une extrémité est immergée dans le creuset et l'autre placée au contact de la pièce. Le drain assure le transport par capillarité du silicium à l'état liquide entre le creuset et la pièce.

Le drain peut être formé originellement par une mèche de filaments continus de carbone ou par une cordelette tressée, ou tresse en filaments discontinus de carbone. On peut aussi utiliser avantageusement une mèche, cordelette ou tresse en filaments de SiC ou en filaments de carbone préimprégnés par du silicium pur ou allié.

L'extrémité au contact de la pièce peut être fixée à celle-ci par un point de colle, par ligature ou par pincement. Les filaments de carbone sont siliciurés et convertis en carbure de silicium par le contact avec le silicium fondu.

En variante, comme montré schématiquement par la figure 5, l'extrémité du drain 46 au contact de la pièce peut être logée dans un trou borgne 47 formé dans la pièce 40, afin de favoriser l'alimentation de tout le volume de la pièce en phase de type silicium.

Comme le montrent les figures 4 et 5, l'alimentation de la pièce peut être réalisée au voisinage d'une extrémité de celle-ci, le silicium en fusion progressant au sein de la porosité du matériau composite garnie de l'aérogel ou xérogel de carbone. La porosité, fractionnée par l'aérogel ou le xérogel, est progressivement comblée. Lorsque le volume accessible a été rempli, l'excès de silicium reste dans le creuset. Toutefois, la quantité de silicium présent dans le matériau composite peut être ajustée par réglage de la quantité de silicium en fusion apporté lors de la siliciuration.

La siliciuration est réactive vis-à-vis de l'aérogel ou xérogel de carbone qui est transformé en aérogel ou xérogel de carbure de silicium par réaction avec le silicium en fusion. La siliciuration peut être aussi réactive avec le matériau composite thermostructural selon la nature du matériau de la matrice formant les surfaces des pores parcourues par le silicium en fusion.

Après siliciuration, on obtient une pièce en matériau composite thermostructural avec une phase de matrice en silicium renfermant un aérogel ou xérogel en carbure de silicium.

Il peut être utile de maîtriser l'écoulement du silicium à la surface du matériau composite de la pièce 40, et plus particulièrement de l'éviter pour favoriser la pénétration du silicium au sein du matériau composite lorsqu'il parvient au contact de la pièce.

A cet effet, autour de la zone de contact entre le drain et la pièce, un matériau peut être déposé apte à s'opposer à l'écoulement du silicium en surface, c'est-à-dire un matériau non mouillé par le silicium et non réactif avec celui-ci. Un matériau convenant à cet effet est un matériau à base de nitrure de bore hexagonal BN. Comme montré par la figure 6, il peut être mis en oeuvre sous forme d'un bourrelet 48 entourant la zone de contact entre le drain 46 et la pièce 40 et empêchant le silicium de s'étaler à la surface de la pièce 40. Le bourrelet 48 peut être formé par une pâte de BN telle que celle commercialisée sous la référence "Combat Boron Nitride" par la société des Etats-Unis d'Amérique Carborundum.

A la place du bourrelet 48, ou en complément à celui-ci, il est possible de pulvériser sur la surface de la pièce 40, hors la zone de contact entre le drain 46 et la pièce, un film de BN. On pourra utiliser à cet effet le produit commercialisé sous la dénomination "DN60" par Acheson, département de la société britannique National Starch and Chemical Company.

Le dépôt de BN, ou d'un matériau ayant la même fonction, peut ne pas être réalisé tout autour de la zone de contact entre le drain et la surface du matériau composite de la pièce 40, selon le degré souhaité de limitation de l'écoulement du silicium sur cette surface.

En variante, notamment lorsque la pièce en matériau composite thermostructural à siliciurer est de taille relativement grande, l'alimentation de celle-ci par le silicium fondu peut être réalisée en plusieurs points.

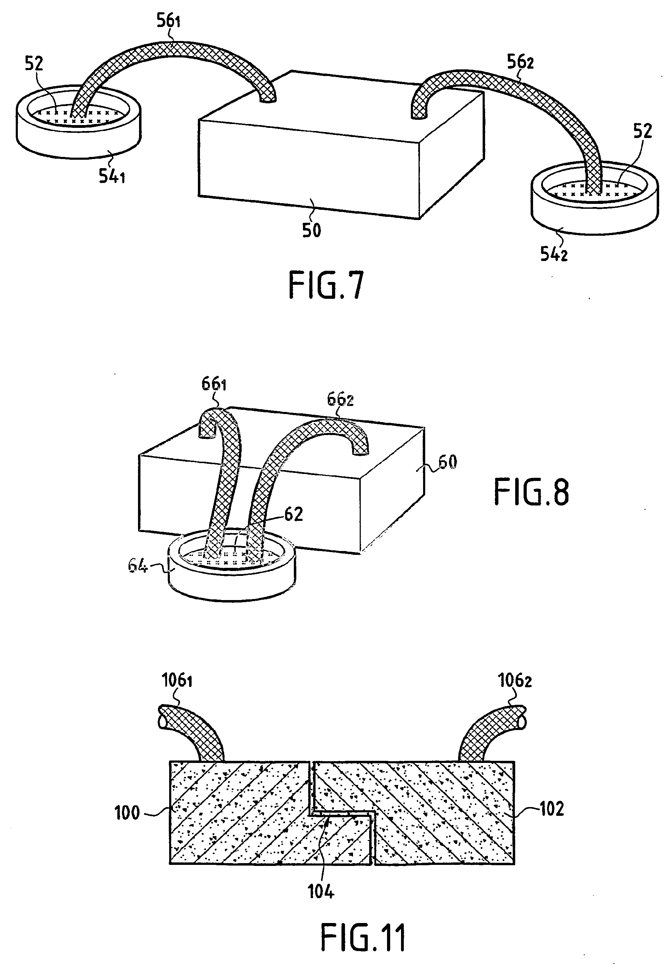

Ainsi, la figure 7 montre une pièce 50 qui est alimentée à partir de deux creusets 54₁, 54₂ contenant du silicium en fusion 52. Les creusets sont reliés à la pièce par deux drains respectifs 56₁, 56₂ qui viennent au contact de la pièce au voisinage d'extrémités opposées de celle-ci.

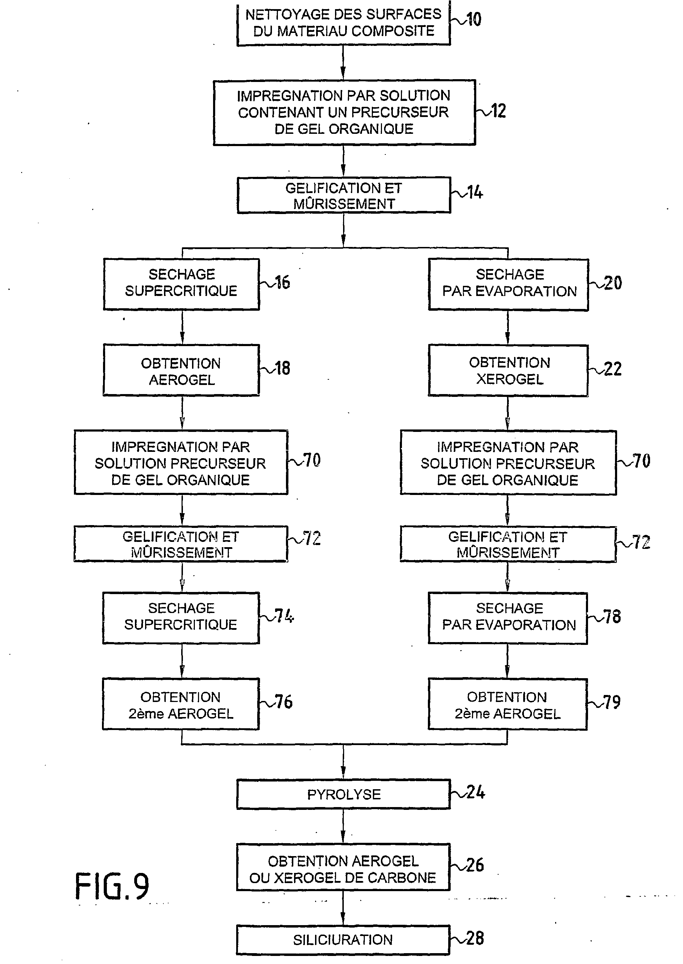

La figure 8 montre une pièce 60 qui est alimentée à partir d'un creuset 64 contenant du silicium en fusion 62 au moyen de deux drains 66₁, 66₂ reliant le creuset à deux parties d'extrémité opposées de la pièce.

Comme indiqué plus haut, les procédés d'imprégnation des figures 3 à 8 peuvent être utilisés avec une phase de type silicium autre que constituée de silicium seul, c'est-à-dire une phase contenant du germanium et/ou au moins un autre élément de type métalloïde ou métal choisi par exemple parmi le bore, le carbone, le fer, le cobalt, le titane, le zirconium, le molybdène et le vanadium. Dans tous les cas, la siliciuration est de préférence réalisée à une température très légèrement supérieure à la température de fusion de la phase de type silicium, par exemple dans la limite de 15°C, voire 10°C au-delà de cette température de fusion. Dans ces conditions, la viscosité de la phase de type silicium reste relativement élevée, ce qui permet une invasion lente de la porosité du matériau composite et de l'aérogel, le remplissage étant alors plus complet.

L'association de germanium au silicium permet d'abaisser le point de fusion afin d'éviter une possible dégradation du renfort fibreux du matériau composite lorsque ce renfort est formé de fibres qui ne restent stables que jusqu'à une température proche ou inférieure au point de fusion du silicium (environ 1410°C). C'est le cas notamment de fibres SiC commercialisées sous l'appellation "NLM 202" par la société japonaise Nippon Carbon dont la stabilité peut être affectée au-delà de 1250°C. La présence de germanium permet aussi de former par oxydation l'oxyde GeO₂ qui, comme SiO₂, forme un verre protecteur contre l'oxydation. Par rapport à SiO₂, l'oxyde GeO₂ a pour avantages de se former à plus basse température et d'avoir une plus basse température de ramollissement. Cela permet d'étendre le domaine dans lequel est offerte une capacité d'autocicatrisation de fissures susceptibles d'apparaître en surface du matériau, l'autocicatrisation étant produite par le ramollissement des composés vitreux formés par oxydation. La cicatrisation des fissures protège le matériau vis-à-vis du milieu oxydant environnant et contribue à une protection anti-oxydation efficace.

L'association de bore permet également, d'une part, d'abaisser la température de fusion de la phase de type silicium et, d'autre part, de former par oxydation un verre de type borosilicaté (SiO₂, B₂O₃) ayant de bonnes propriétés d'autocicatrisation et offrant donc une bonne protection contre l'oxydation. Lorsque la matrice du matériau composite contient du bore, par exemple dans le cas d'une matrice contenant au moins une phase de type Si-B-C comme décrit dans les documents US 5 246 736 et US 5 965 266, l'utilisation d'une phase de type silicium saturée en bore permet aussi d'éviter que le bore de la matrice diffuse dans la phase de type silicium au cours du traitement thermique de siliciuration et entraîne la dégradation de la matrice du matériau composite.

L'association d'au moins un métalloïde autre que Si ou Ge et/ou d'un métal peut permettre de ne pas laisser subsister de silicium (ou germanium) libre après siliciuration et de conférer ainsi un caractère réfractaire accru au matériau. Par exemple, on peut utiliser une phase de type silicium contenant un alliage de silicium et de molybdène dans lequel la quantité de silicium est choisie pour qu'après siliciuration, tout le silicium ait réagi en formant SiC par réaction avec le carbone de l'aérogel ou xérogel et en formant MoSi₂, composé très réfractaire, par réaction avec le molybdène. Il en est de même en remplaçant le molybdène en tout ou partie par un autre métal parmi ceux cités plus haut.

L'association de carbone et titane avec le silicium permet d'obtenir un composé Ti₃SiC₂ qui est une céramique réfractaire à structure lamellaire peu fragile. Une telle structure lamellaire permet, par dissipation d'énergie entre couches, d'arrêter la propagation de fissures au sein du matériau composite, donc d'améliorer la tenue de celui-ci aux chocs.

Le taux de carbone de l'aérogel ou du xérogel final peut être maîtrisé de deux façons. Une première voie consiste à contrôler le rapport entre les constituants de la solution aqueuse utilisée pour l'imprégnation du matériau composite thermostructural, par exemple le rapport entre le résorcinol, le formaldéhyde et le carbonate de sodium. La deuxième voie consiste à répéter l'introduction d'un aérogel ou xérogel. Ainsi, la figure 9 illustre un autre mode de réalisation du procédé qui se distingue de celui de la figure 2 en ce qu'après l'étape 18 d'obtention d'aérogel ou l'étape 22 d'obtention de xérogel, on réalise des étapes 70, 72, 74 ou 70, 72, 78 d'imprégnation par solution contenant un précurseur de gel organique (étape 70), de gélification et mûrissement (étape 72) et de séchage supercritique (étape 74) ou par évaporation (étape 78). On obtient alors une deuxième structure d'aérogel (étape 76) ou de xérogel (étape 79) interpénétrée avec la première.

L'étape de pyrolyse 24 permet d'obtenir un aérogel ou xérogel de carbone (étape 26) plus dense que celui obtenu avec le procédé de la figure 2 tout en restant nanométrique et arachnéen. La siliciuration est réalisée ensuite (étape 28).

La formation d'aérogel ou xérogel avant siliciuration peut être répétée plus de deux fois.

En variante, il est possible de former successivement un aérogel puis un xérogel (ou inversement). La probabilité de fissuration du xérogel, offrant des chemins d'accès à la phase de type silicium lors de la siliciuration, peut alors être intéressante dans la mesure où le remplissage préalable de la porosité du matériau composite est plus dense.

On notera que l'augmentation de la quantité de carbone par formation de plusieurs aérogels et/ou xérogels successifs permet de consommer une plus grande partie du silicium (et/ou germanium) introduit pour la réaction avec le carbone, donc de réduire la quantité de silicium (et/ou germanium) libre subsistant en final dans le matériau.

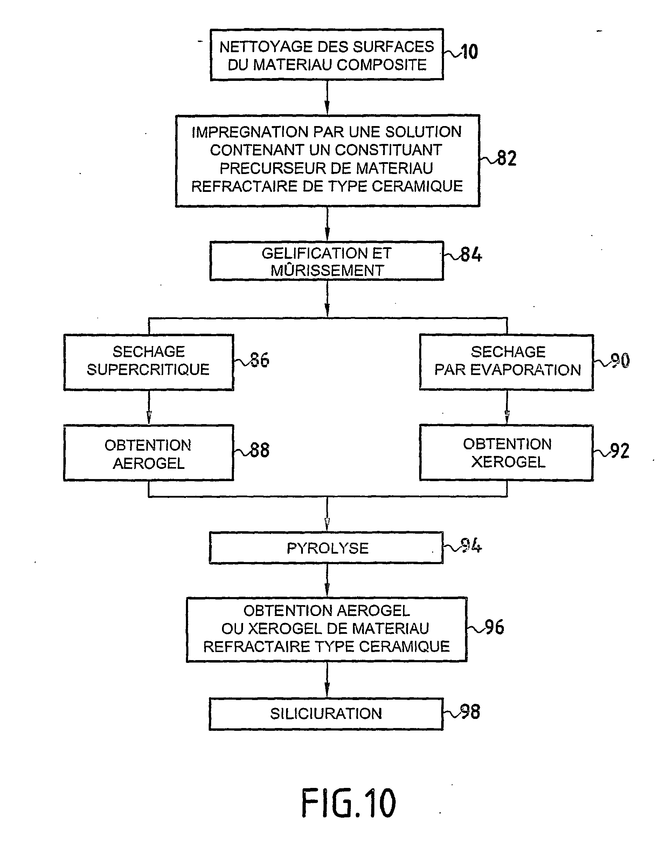

Selon encore un autre mode de réalisation du procédé conforme à l'invention (figure 10), on met en place au sein de la porosité du matériau composite thermostructural, avant siliciuration, au moins un aérogel ou xérogel d'un matériau réfractaire de type céramique.

Ce mode de réalisation se distingue de celui de la figure 2 en ce que, après l'étape éventuelle 10 de nettoyage des surfaces accessibles du matériau composite thermostructural, on réalise une imprégnation par une composition contenant un constituant précurseur de matériau réfractaire de type céramique en solution (étape 82).

Par matériau réfractaire de type céramique, on entend ici notamment un matériau de type carbure, nitrure, borure ou oxyde.

Le précurseur peut être un composé organométalloïdique ou organométallique. Ainsi, dans le cas d'un matériau céramique composé du silicium, le précurseur peut être un composé organosilicié. Un exemple de composé organosilicié est le polycarbosilane (PCS) précurseur de SiC. Le solvant est choisi en fonction du composé utilisé. Pour le PCS, on pourra choisir un solvant parmi le xylène, le toluène, l'heptane et l'hexane, par exemple. Afin de réaliser la gélification (polymérisation) du PCS, un catalyseur peut être- ajouté à la solution d'imprégnation tel que le borodiphénylsiloxane. Un autre précurseur de SiC utilisable est le polyvinylsilane (PVS) qui peut donner un gel par réaction avec un peroxyde.

Après imprégnation par la composition contenant une solution de précurseur de matériau réfractaire de type céramique, on procède à la gélification in situ, au sein de la porosité du matériau composite, gélification suivie de mûrissement (étape 84).

La gélification est effectuée en étuve, dans une enceinte fermée, à une température inférieure à celle d'évaporation du solvant.

Après gélification et mûrissement, on procède à une étape de séchage supercritique, éventuellement après échange de solvant, (étape 86) pour obtenir un aérogel de précurseur de matériau de type céramique (étape 88) ou à une étape de séchage par évaporation (étape 90) pour obtenir un xérogel de précurseur de matériau de type céramique (étape 92).

Les étapes de séchage supercritique ou de séchage par évaporation sont semblables aux étapes 18 et 22 du procédé de la figure 2.

Une pyrolyse (étape 94) est ensuite effectuée pour obtenir un aérogel ou xérogel en matériau réfractaire de type céramique (étape 96). La pyrolyse est effectuée à une température de 600°C à 2000°C (voire plus) selon la nature du précurseur.

Plusieurs aérogels et/ou xérogels de précurseur de matériau de type céramique pourront être formés successivement avant pyrolyse.

On pourrait aussi former successivement un aérogel ou xérogel de précurseur de carbone puis un aérogel ou xérogel de précurseur de matériau de type céramique, ou inversement.

Après pyrolyse, on procède à l'étape de siliciuration (étape 98) par imprégnation du matériau composite par une phase de type silicium en fusion. La siliciuration peut être réalisée comme décrit plus haut.

On obtient alors une pièce en matériau composite thermostructural dont la matrice comporte une phase de type silicium emprisonnant au moins un aérogel ou xérogel de matériau réfractaire de type céramique.

Selon la nature de l'aérogel ou xérogel, la siliciuration peut être non réactive, laissant l'aérogel ou xérogel inchangé.

Le procédé de traitement de matériaux composites thermostructuraux conforme à l'invention permet de conférer à des pièces obtenues par le procédé des propriétés particulières stables et reproductibles en termes de conductibilité thermique, tenue mécanique, étanchéité, caractéristiques tribologiques.

Ainsi, selon une application particulière du procédé, celui-ci peut être utilisé pour obtenir des électrodes en matériau composite thermostructural siliciuré, notamment en matériau composite C/C siliciuré.

Par rapport à des électrodes en matériau composite C/C telles qu'elles peuvent être obtenues sans le traitement par un procédé conforme à l'invention, on peut ainsi améliorer la tenue mécanique et réaliser une étanchéification des électrodes, sans affecter la conductibilité électrique.

Des électrodes obtenues par un procédé selon l'invention sont notamment utilisables comme anodes et/ou cathodes et/ou grilles accélératrices pour moteurs plasmiques ou moteurs ioniques.

Une autre application similaire est la réalisation de plaques bipolaires pour piles à combustible.

Selon une autre application particulière montrée plus loin dans des exemples, un procédé selon l'invention peut être utilisé pour obtenir des pièces de friction pour freins ou embrayages aux propriétés tribologiques améliorées.

Un procédé conforme à la présente invention peut encore être utilisé pour réaliser une liaison entre pièces en matériau composite thermostructural. La réalisation d'une telle liaison peut être souhaitée notamment pour obtenir un élément de forme complexe ou de dimensions relativement grandes difficile ou impossible à réaliser en une seule pièce.

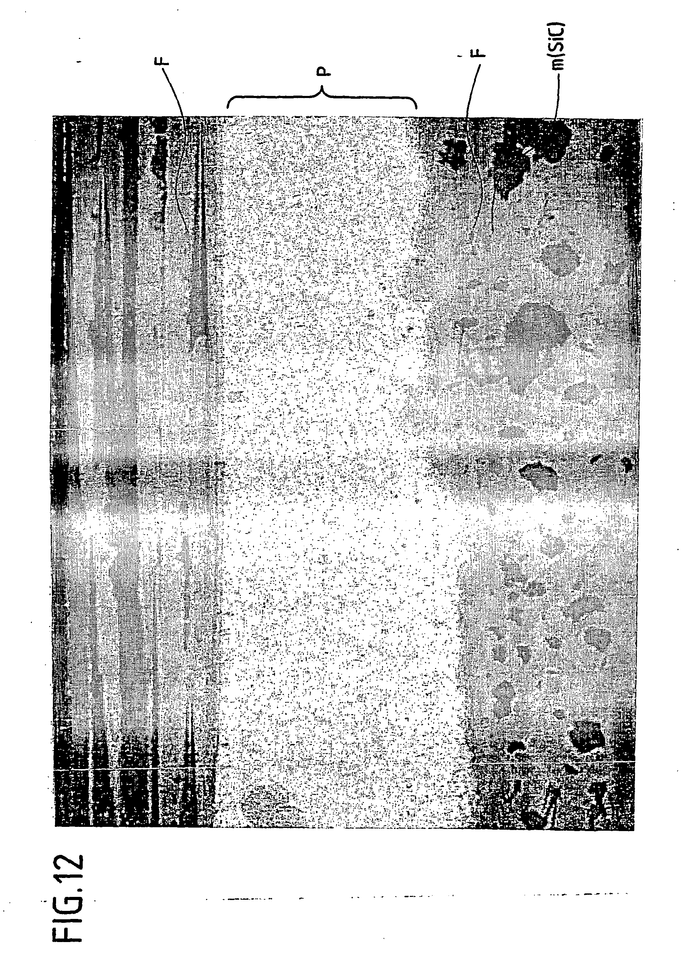

Deux pièces 100, 102 à assembler en matériau composite thermostructural (figure 11) sont réunies avec des surfaces respectives placées côte à côte. Sur la figure, par souci de simplification, on a représenté des pièces de formes simples.

Les pièces 100, 102 sont imprégnées par une solution dont les constituants permettent, après gélification, mûrissement et séchage, d'obtenir un aérogel ou xérogel en un précurseur de carbone ou de matériau céramique. L'aérogel ou le xérogel est formé au sein de la porosité accessible du matériau composite des pièces 100, 102 ainsi que dans l'interface ou joint 104 défini par les surfaces adjacentes des pièces.

Après transformation du précurseur par pyrolyse, on procède à une siliciuration par une phase de type silicium.

On obtient alors une phase de type silicium renfermant un réseau nanométrique en matériau réfractaire et s'étendant continûment dans la porosité des pièces assemblées et dans le joint entre celles-ci, réalisant une liaison entre les pièces.

Les phases de formation d'un aérogel ou xérogel en précurseur de carbone ou céramique (formation qui peut être répétée), de pyrolyse et de siliciuration sont réalisées comme décrit ci-avant. Lors de la siliciuration, les pièces 100, 102 sont alimentées par des drains respectifs 106₁, 106₂ reliant les pièces à des creusets différents contenant la phase de type silicium, ou à un même creuset.

### Exemple 1

Le procédé est mis en oeuvre sur un bloc de matériau composite SiC/SiC à renfort en fibres essentiellement en SiC et à matrice SiC obtenue par infiltration chimique en phase vapeur. Les fibres sont des fibres commercialisées sous la dénomination "Hi-Nicalon" par la société japonaise Nippon Carbon Co., Ltd. La matrice SiC est obtenue de façon bien connue à partir d'une phase gazeuse réactionnelle comportant du méthyltrichlorosilane (MTS) et du gaz hydrogène (H₂).

Le bloc de matériau SiC/SiC est imprégné par une solution aqueuse contenant un mélange de phloroglucinol et de formaldéhyde ainsi que du carbonate de sodium faisant fonction de catalyseur.

L'imprégnation est réalisée par immersion du bloc de matériau SiC/SiC dans un bain de cette solution à l'intérieur d'un bac en enceinte fermée avec mise sous vide, puis retour à la pression atmosphérique.

La gélification puis le mûrissement sont effectués en portant la température du bloc de matériau SiC/SiC imprégné à environ 55°C pendant environ 24 h.

L'aérogel organique est obtenu ensuite par séchage supercritique. On procède à un échange de solvant pour remplacer l'eau par le dioxyde de carbone (CO₂) en procédant à un échange intermédiaire avec de l'éthanol, comme décrit dans l'article précité de L. Kocon. Le séchage est effectué par dépassement du point critique de CO₂ (31,1°C et 7,3 MPa).

L'aérogel organique obtenu est transformé en aérogel de carbone par pyrolyse à 1000°C sous atmosphère neutre, par exemple sous azote ou argon.

Une siliciuration est ensuite effectuée par apport de silicium fondu au moyen d'un drain formé d'une cordelette en fibres SiC "Hi-Nicalon" ayant une extrémité immergée dans un creuset contenant Si fondu et une autre extrémité au contact du bloc de matériau SiC/SiC dont la porosité est garnie d'aérogel de carbone. La siliciuration est réalisée avec du Si fondu à environ 1450°C.

Un examen microscopique (figure 12) du matériau obtenu a montré que l'intégralité de l'aérogel de carbone a été converti en SiC par réaction avec le silicium en fusion, et qu'il subsistait du silicium libre au sein du matériau. Sur la figure 12, le carbure de silicium apparaît en gris et le silicium libre en blanc dans la porosité P du matériau composite. On distingue aussi les fibres F du matériau composite et la matrice en SiC qui gaine et relie entre elles les fibres F.

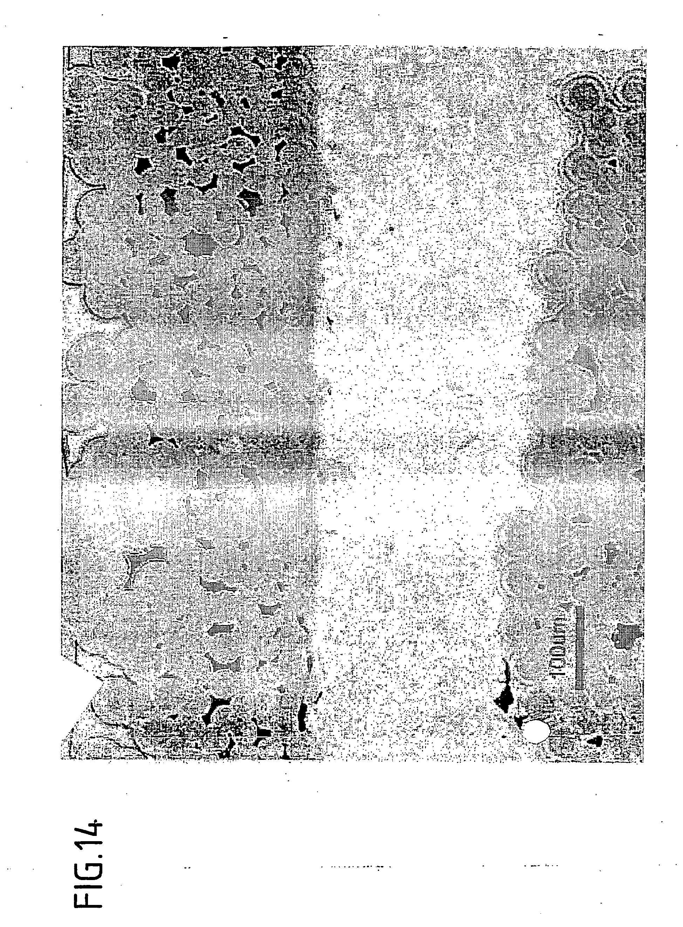

La figure 14 illustre le même matériau composite thermostructural SiC/SiC après siliciuration par du silicium en fusion, mais sans introduction préalable d'aérogel dans la porosité P du matériau composite. On constate que cette porosité est simplement comblée par du silicium libre.

Par ailleurs, une mesure de la conductivité thermique du matériau SiC/SiC siliciuré a montré qu'elle était multipliée par 4 par rapport à un même matériau SiC/SiC dont la densification a été poursuivie par infiltration chimique en phase vapeur.

### Exemple 2

Le procédé est mis en oeuvre sur un bloc de matériau C/SiC à renfort en fibres de carbone à précurseur en polyacrylonitrile (PAN) préoxydé et à matrice SiC obtenue par infiltration chimique en phase vapeur à partir d'une phase gazeuse réactionnelle contenant un mélange de MTS et H₂.

Le bloc de matériau C/SiC ayant un taux volumique de porosité d'environ 15 % est imprégné par une solution aqueuse contenant un mélange de résorcinol et de formaldéhyde ainsi que du carbonate de sodium.

L'imprégnation est réalisée par immersion dans un bain et sous vide.

La gélification et le mûrissement sont effectués en portant la température du bloc de matériau C/SiC imprégné à environ 55°C en étuve, pendant environ 24 h.

Un xérogel organique est obtenu ensuite par séchage contrôlé provoquant l'évaporation de l'eau du gel. A cet effet, la température est élevée progressivement et lentement (2°C/h) jusqu'à environ 90°C où un palier de 5 h environ est observé.

Le xérogel organique obtenu est transformé en xérogel de carbone par pyrolyse en élevant progressivement la température jusqu'à environ 950°C.

Une siliciuration est réalisée ensuite avec une phase de type silicium comprenant 75 % Si et 25 % Fe (en pourcentage atomique).

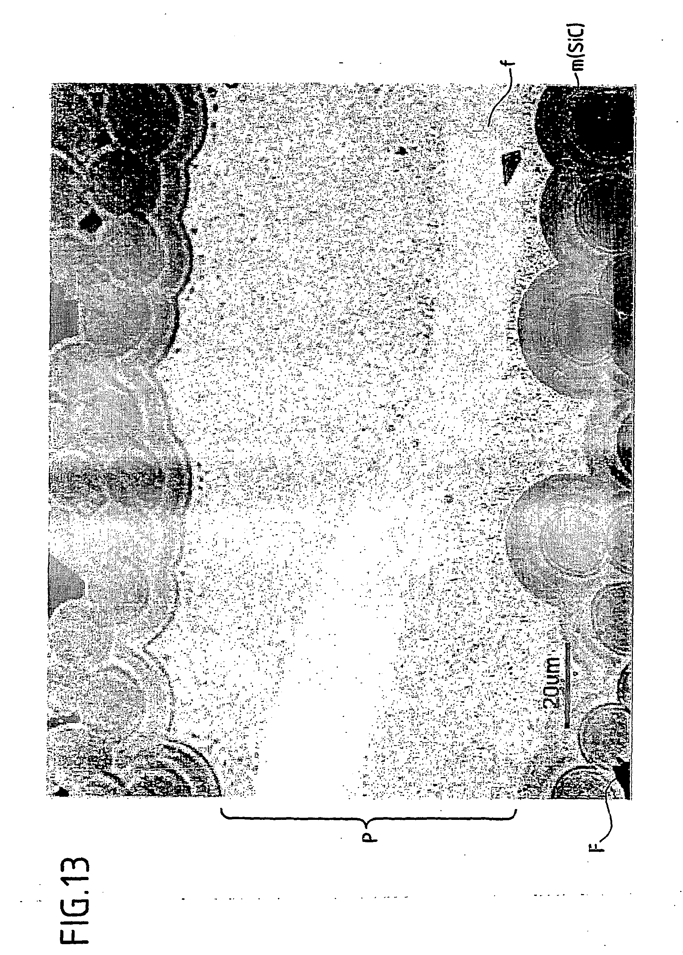

Un examen microscopique (figure 13) du matériau obtenu montre que le xérogel de carbone a été converti en SiC. La figure 13 montre que le xérogel introduit dans la porosité P du matériau est fissuré (fissure f), la fissure étant remplie par du silicium libre avec inclusions de siliciure de fer. Comme sur la figure 12, on distingue les fibres F et la matrice m en SiC du matériau composite.

### Exemple 3

On procède comme dans l'exemple 1, mais en utilisant un matériau SiC/SiC dont le renfort fibreux est à base de fibres "Nicalon NLM 202" de stabilité thermique limitée et en effectuant la siliciuration avec un mélange de silicium et de germanium dans des proportions 50/50 atomiques.

La température de liquidus de la phase Si+Ge est d'environ 1250°C. Après fusion du mélange SiC+Ge à 1280°C, on obtient une imprégnation réactive de l'aérogel de carbone et sa transformation en carbure sans dégrader les fibres "Nicalon NLM 202".

### Exemple 4

On utilise un bloc de matériau SiC/SiC comme dans l'exemple 1, mais on réalise l'imprégnation par une composition contenant une solution de polycarbosilane (PCS) dans du xylène en présence de borodiphényisiloxane.

L'imprégnation est réalisée par immersion du bloc de matériau SiC/SiC sous vide, puis retour à la pression atmosphérique.

La gélification est ensuite effectuée en portant le bloc de matériau SiC/SiC imprégné à une température d'environ 80°C en enceinte étanche.

Un xérogel de précurseur de SiC est obtenu par évaporation simple du solvant en étuve ventilée à 80°C.

Un xérogel de SiC est ensuite obtenu par pyrolyse effectuée en élevant progressivement la température jusqu'à 900°C.

Du silicium fondu venant combler la porosité du xérogel de SiC est introduit par siliciuration effectuée comme dans l'exemple 1.

### Exemple 5

On met en oeuvre le procédé sur un bloc de matériau composite C/C à renfort en fibres de carbone à précurseur PAN préoxydé et à matrice en carbone pyrolytique (PyC) obtenue par infiltration chimique en phase vapeur. La densification par la matrice PyC est interrompue lorsque le bloc de matériau C/C atteint une densité environ égale à 1,4, correspondant à une porosité résiduelle d'environ 27 % en volume.

Un xérogel de carbone est mis en place au sein de la porosité du bloc de matériau C/C comme décrit dans l'exemple 2, et est converti en xérogel de SiC par siliciuration, également comme décrit dans l'exemple 2.

On obtient ainsi un matériau C/C (SiC-Si) caractérisé en ce que les macroporosités du matériau C/C de départ sont comblées non pas par une phase silicium mais par un système composite constitué d'une matrice de silicium divisée et armée par un xérogel de SiC. Cette division et ce renforcement de la phase siliciée modifient les propriétés tribologiques du matériau C/C de départ et permettent d'obtenir un coefficient de frottement élevé et une faible usure.

### Exemple 6

On procède comme dans l'exemple 5, mais en mettant en place au sein de la porosité du bloc de matériau C/C deux xérogels de carbone de façon successive, avant siliciuration.

Le matériau C/C-(SiC-Si) obtenu se distingue de celui de l'exemple 5 par un rapport volumique SiC/Si plus important.

En faisant varier la quantité de xérogel de carbone, on peut ainsi moduler les propriétés tribologiques du matériau obtenu.

Les matériaux C/C-(SiC-Si) obtenus selon les exemples 5 et 6 sont notamment utilisables pour des applications en friction, en particulier pour réaliser des freins à hautes performances pour avions, véhicules terrestres, des embrayages, ...

Ainsi, on pourra réaliser des pièces de friction en forme de disques de freins d'avion avec ces matériaux composites C/C-(SiC-Si).

Un assemblage (ou puits de chaleur) de disques rotors et de disques stators pour un frein d'avion peut être constitué de tels disques.

En variante, dans un assemblage de disques rotors et stators d'un frein d'avion, certains disques par exemple les disques rotors (ou stators) peuvent être réalisés en matériau composite C/C - (SiC-Si) tandis que les autres disques, c'est-à-dire les disques stators (ou rotors) sont en matériau composite C/C non siliciuré.

### Exemple 7

Une éprouvette de matériau composite C/SiC de dimensions 50 x 28 x 5 mm est traitée comme dans l'exemple 2.

Après siliciuration, un test d'étanchéité à l'hélium est réalisé sur l'éprouvette en matériau C/SiC-(SiC-Si) obtenue. On mesure une valeur de fuite de 10⁻⁴ Pa.m³/s, qui est une valeur faible. Avant traitement, la mesure n'est pas réalisable tant le matériau est perméable.

Cet exemple montre la capacité du procédé selon l'invention à étanchéifier en volume des matériaux composites thermostructuraux.

On notera que l'étanchéité peut encore être augmentée par formation, à la surface du matériau composite siliciuré, d'un revêtement en matériau céramique, par exemple en SiC. Ce revêtement peut être obtenu par infiltration ou dépôt chimique en phase vapeur.

## Revendications

1. Procédé de traitement de matériau composite thermostructural poreux par imprégnation par une phase de type silicium en fusion, **caractérisé en ce que**, avant imprégnation par la phase de type silicium, on forme au sein de la porosité du matériau composite un aérogel ou un xérogel constituant un précurseur de matériau réfractaire et on transforme le précurseur par pyrolyse pour obtenir un aérogel ou un xérogel en matériau réfractaire.

2. Procédé selon la revendication 1, **caractérisé en ce que** l'aérogel ou xérogel est formé par imprégnation du matériau composite par une composition contenant au moins un composé organique, organométalloïdique ou organométallique en solution, et gélification in situ.

3. Procédé selon la revendication 2, **caractérisé en ce que**, avant imprégnation par une phase de type silicium, on répète plusieurs fois les étapes d'imprégnation par une composition contenant au moins un composé organique, organométalloïdique ou organométallique en solution et de gélification in situ.

4. Procédé selon l'une quelconque des revendications 1 à 3, **caractérisé en ce que** l'on forme au sein de la porosité du matériau composite un aérogel ou xérogel en un matériau organique précurseur de carbone.

5. Procédé selon la revendication 4, **caractérisé en ce que** l'aérogel ou xérogel est formé par imprégnation du matériau composite par une composition contenant un précurseur de résine organique en solution.

6. Procédé selon l'une quelconque des revendications 1 à 3, **caractérisé en ce que** l'on forme au sein de la porosité du matériau composite un aérogel ou xérogel constitué d'un précurseur de matériau réfractaire de type céramique.

7. Procédé selon la revendication 6, **caractérisé en ce que** l'aérogel ou xérogel est formé par imprégnation du matériau composite par une composition contenant un composé organosilicié en solution.

8. Procédé selon la revendication 7, **caractérisé en ce que** l'on utilise un composé précurseur de carbure de silicium.

9. Procédé selon l'une quelconque des revendications 1 à 8, **caractérisé en ce que**, après formation d'au moins un aérogel ou xérogel en matériau réfractaire au sein de la porosité du matériau composite, on réalise une imprégnation par une phase en fusion constituée de silicium et/ou de germanium.

10. Procédé selon l'une quelconque des revendications 1 à 8, **caractérisé en ce que**, après formation d'au moins un aérogel ou xérogel en matériau réfractaire au sein de la porosité du matériau composite, on réalise une imprégnation par une phase en fusion comprenant majoritairement du silicium et/ou du germanium allié avec au moins un métal ou un autre métalloïde.

11. Procédé selon la revendication 10, **caractérisé en ce que** l'on utilise une phase en fusion comprenant majoritairement du silicium et/ou du germanium allié avec au moins un élément choisi parmi le fer, le cobalt, le titane, le zirconium, le molybdène, le vanadium, le carbone et le bore.

12. Procédé selon l'une quelconque des revendications 1 à 11, **caractérisé en ce que** l'imprégnation par une phase de type silicium est réalisée en amenant celle-ci localement au contact du matériau composite par capillarité au moyen d'au moins un drain ayant une extrémité au contact de la phase de type silicium en fusion dans un creuset et une autre extrémité au contact du matériau composite.

13. Procédé selon la revendication 12, **caractérisé en ce que** l'on utilise au moins un drain sous forme d'une texture fibreuse.

14. Procédé selon la revendication 13, **caractérisé en ce que** l'on utilise au moins un drain sous forme d'une tresse.

15. Procédé selon l'une quelconque des revendications 13 et 14, **caractérisé en ce que** la texture fibreuse est en carbone ou carbure de silicium.

16. Procédé selon l'une quelconque des revendications 12 à 15, **caractérisé en ce que** l'extrémité du drain au contact du matériau est logée dans un trou borgne formé dans le matériau composite.

17. Procédé selon l'une quelconque des revendications 12 à 16, **caractérisé en ce que** l'on forme sur la surface du matériau composite en contact avec le drain un dépôt d'un matériau apte à s'opposer à l'écoulement de la phase de type silicium sur cette surface.

18. Procédé selon la revendication 17, **caractérisé en ce que** ledit dépôt de matériau est formé autour de la zone de contact entre le drain et le matériau composite.

19. Procédé selon l'une quelconque des revendications 16 à 18, **caractérisé en ce que** le matériau apte à s'opposer à l'écoulement de la phase de type silicium est à base de nitrure de bore.

20. Procédé pour la liaison de pièces en matériau composite thermostructural comprenant l'amenée côte à côte de surfaces respectives des pièces, **caractérisé en ce que** l'on met en oeuvre un procédé selon l'une quelconque des revendications 1 à 19 avec formation d'un aérogel ou d'un xérogel en matériau réfractaire au sein de la porosité du matériau composite des pièces et dans l'interface ou joint entre lesdites surfaces des pièces et une siliciuration par imprégnation par une phase du type silicium.

21. Utilisation d'un procédé selon l'une quelconque des revendications 1 à 19 pour l'amélioration des propriétés tribologiques d'une pièce en matériau composite carbone/carbone.

22. Utilisation d'un procédé selon l'une quelconque des revendications 1 à 19 pour l'amélioration de la conductibilité thermique d'une pièce en matériau composite carbone/carbure de silicium.

23. Utilisation d'un procédé selon l'une quelconque des revendications 1 à 19 pour l'étanchéification d'une pièce en matériau composite thermostructural.

24. Procédé d'étanchéification de pièce en matériau composite selon la revendication 23, **caractérisé en ce que**, après siliciuration, on réalise un revêtement de surface en un matériau céramique.

25. Pièce en matériau composite thermostructural siliciuré obtenue par un procédé selon l'une quelconque des revendications 1 à 19, **caractérisée en ce qu'**elle constitue une électrode de moteur ionique ou plasmique.

26. Pièce en matériau composite thermostructural siliciuré obtenue par un procédé selon l'une quelconque des revendications 1 à 19, **caractérisée en ce qu'**elle constitue une plaque bipolaire de pile à combustible.

27. Pièce en matériau composite thermostructural siliciuré, **caractérisée en ce que** le matériau composite thermostructural siliciuré comprend une phase de type silicium renfermant au moins un réseau nanométrique en matériau réfractaire de type céramique.

28. Pièce selon la revendication 27, **caractérisée en ce que** le réseau nanométrique est en carbure de silicium.

29. Pièce selon l'une quelconque des revendications 27 et 28, **caractérisée en ce que** la phase de type silicium est constituée par du silicium et/ou du germanium.

30. Pièce de friction selon l'une quelconque des revendications 27 à 29, **caractérisée en ce qu'**elle comprend un matériau composite carbone/carbone dont la porosité est au moins partiellement comblée par une phase de silicium renfermant un réseau nanométrique de carbure de silicium.

31. Assemblage de disques rotors et stators d'un frein d'avion, **caractérisé en ce que** les disques sont des pièces de friction selon la revendication 30.

32. Assemblage de disques rotors et stators d'un frein d'avion, **caractérisé en ce que** les disques rotors - ou stators - sont des pièces de friction selon la revendication 31 tandis que les autres disques sont en matériau composite carbone/carbone non siliciuré.

## Claims

1. A method of treating a porous thermostructural composite material by impregnation with a molten silicon type phase, the method being **characterised in that** prior to impregnation with a silicon type phase, an aerogel or xerogel of a precursor for a refractory material is formed within the pores of the composite material, and the precursor is transformed by pyrolysis in order to obtain an aerogel or xerogel of refractory material.

2. A method according to claim 1, **characterised in that** the aerogel or xerogel is formed by impregnating the composite material with a composition containing at least one organic, organometalloid, or organometallic compound in solution, and by gelling in situ.

3. A method according to claim 2, **characterised in that** prior to impregnating with a silicon type phase, the steps of impregnation with a composition containing at least one organic, organometalloid, or organometallic compound in solution followed by in situ gelling are repeated a plurality of times.

4. A method according to any one of claims 1 to 3, **characterised in that** an aerogel or xerogel of an organic material that is a precursor of carbon is formed within the pores of the composite material.

5. A method according to claim 4, **characterised in that** the aerogel or xerogel is formed by impregnating the composite material with a composition containing an organic resin precursor in solution.

6. A method according to any one of claims 1 to 3, **characterised in that** an aerogel or xerogel constituted by a precursor of a ceramic type refractory material is formed within the pores of the composite material.

7. A method according to claim 6, **characterised in that** the aerogel or xerogel is formed by impregnating the composite material with a composition containing an organosilicon compound in solution.

8. A method according to claim 7, **characterised in that** a compound is used that is a precursor of silicon carbide.

9. A method according to any one of claims 1 to 8, **characterised in that** after forming at least one aerogel or xerogel of refractory material within the pores of the composite material, it is impregnated with a molten phase constituted by silicon and/or germanium.

10. A method according to any one of claims 1 to 8, **characterised in that** after forming at least one aerogel or xerogel of refractory material within the pores of the composite material, it is impregnated with a molten phase comprising a majority of silicon and/or germanium alloyed with at least one metal or another metalloid.

11. A method according to claim 10, **characterised in that** a molten phase is used comprising a majority of silicon and/or germanium alloyed with at least one element selected from: iron, cobalt, titanium, zirconium, molybdenum, vanadium, carbon, and boron.

12. A method according to any one of claims 1 to 11, **characterised in that** the impregnation with a silicon type phase is performed by bringing it locally into contact with the composite material by capillarity using at least one drain having one end in contact with the molten silicon type phase in a crucible and its other end in contact with the composite material.

13. A method according to claim 12, **characterised in that** at least one drain is used in the form of a fibre texture.

14. A method according to claim 13, **characterised in that** at least one drain is used in the form of a braid.

15. A method according to claim 13 or claim 14, **characterised in that** the fibre texture is made of carbon or of silicide carbide.

16. A method according to any one of claims 12 to 15, **characterised in that** the end of the drain in contact with the material is received in a blind hole formed in the composite material.

17. A method according to any one of claims 12 to 16, **characterised in that** a deposit is formed on the surface of the composite material in contact with the drain, the deposit being of a material that is suitable for opposing the flow of the silicon type phase on said surface.

18. A method according to claim 17, **characterised in that** said deposit of material is formed around the contact area between the drain and the composite material.

19. A method according to any one of claims 16 to 18, **characterised in that** the material suitable for opposing the flow of the silicon type phase is based on boron nitride.

20. A method for bonding together thermostructural composite material parts, the method including bringing respective surfaces of the parts side by side and being **characterised in that** a method according to any one of claims 1 to 19 is implemented with an aerogel or xerogel of refractory material being formed within the pores of the composite material of the parts and in the interface or joint between said surfaces of the parts, followed by siliciding by impregnation with a silicon type phase.

21. The use of a method according to any one of claims 1 to 19 for improving the tribological properties of a part made of carbon/carbon composite material.

22. The use of a method according to any one of claims 1 to 19 for improving the thermal conductivity of a part made of carbon/silicon carbide composite material.

23. The use of a method according to any one of claims 1 to 19 for leakproofing a part made of thermostructural composite material.

24. A method of leakproofing a composite material part according to claim 23, **characterised in that** after siliciding, a surface coating is made out of ceramic material.

25. A silicided thermostructural composite material part obtained by a method according to any one of claims 1 to 19, **characterised in that** it constitutes an electrode for an ion or plasma engine.

26. A silicided thermostructural composite material part obtained by a method according to any one of claims 1 to 19, **characterised in that** it constitutes a bipolar plate for a fuel cell.

27. A silicided thermostructural composite material part, **characterised in that** the silicided thermostructural composite material includes a silicon type phase containing at least one nanometric array of ceramic type refractory material.

28. A part according to claim 27, **characterised in that** the nanometric array is made of silicon carbide.

29. A part according to claim 27 or claim 28, **characterised in that** the silicon type phase is constituted by silicon and/or germanium.

30. A friction part according to any one of claims 27 to 29, **characterised in that** it comprises a carbon/carbon composite material having its pores filled at least in part with a silicon phase containing a nanometric array of silicon carbide.

31. A set of rotor and stator disks for an airplane brake, **characterised in that** the disks are friction parts according to claim 30.

32. A set of rotor and stator disks for an airplane brake, **characterised in that** the rotor disks - or stator disks - are friction parts according to claim 30, while the other disks are made of a non-silicided carbon/carbon composite material.

## Patentansprüche

1. Verfahren zur Behandlung eines porösen thermostrukturellen Verbundmaterials durch Imprägnierung durch eine Schmelzphase vom Siliziumtyp, **dadurch gekennzeichnet, daß** vor Imprägnierung durch die Siliziumphase in der Porosität des Verbundmaterials ein Aerogel oder ein Xerogel ausgebildet wird, das einen Vorläufer eines feuerfesten Materials bildet und dann der Vorläufer durch Pyrolyse umgewandelt wird, um ein Aerogel oder ein Xerogel aus feuerfestem Material zu erhalten.

2. Verfahren nach Anspruch 1, **dadurch gekennzeichnet, daß** das Aerogel oder Xerogel durch Imprägnierung des Verbundmaterials mit einer Zusammensetzung, die wenigstens eine organische, organometalloide oder organometallische Verbindung in Lösung enthält, und Gelifizierung in situ ausgebildet wird.

3. Verfahren nach Anspruch 2, **dadurch gekennzeichnet, daß** vor Imprägnierung durch die Siliziumphase mehrmals die Stufen der Imprägnierung durch eine Zusammensetzung, die wenigstens eine organische, organometalloide oder organometallische Verbindung in Lösung enthält, und der Gelifizierung in situ wiederholt werden.

4. Verfahren nach einem der Ansprüche 1 bis 3, **dadurch gekennzeichnet, daß** man in der Porosität des Verbundmaterials ein Aerogel oder Xerogel aus einem organischen Vorläufermaterial von Kohlenstoff ausbildet.

5. Verfahren nach Anspruch 4, **dadurch gekennzeichnet, daß** das Aerogel oder Xerogel durch Imprägnierung des Verbundmaterials durch eine Zusammensetzung ausgebildet wird, die einen Vorläufer eines organischen Harzes in Lösung enthält.

6. Verfahren nach einem der Ansprüche 1 bis 3, **dadurch gekennzeichnet, daß** man in der Porosität des Verbundmaterials ein Aerogel oder Xerogel ausbildet, das aus einem Vorläufer eines feuerfesten Materials vom Keramiktyp besteht.

7. Verfahren nach Anspruch 6, **dadurch gekennzeichnet, daß** das Aerogel oder Xerogel durch Imprägnierung des Verbundmaterials durch eine Zusammensetzung ausgebildet wird, die eine Organsiliziumverbindung in Lösung enthält.

8. Verfahren nach Anspruch 7, **dadurch gekennzeichnet, daß** man eine Vorläuferverbindung von Siliziumcarbid verwendet.

9. Verfahren nach einem der Ansprüche 1 bis 8, **dadurch gekennzeichnet, daß** nach Ausbildung wenigstens eines Aerogels oder Xerogels aus feuerfestem Material in der Porosität des Verbundmaterials eine Imprägnierung durch eine Schmelzphase durchgeführt wird, die aus Silizium und/oder Germanium besteht.

10. Verfahren nach einem der Ansprüche 1 bis 8, **dadurch gekennzeichnet, daß** nach Ausbildung von wenigstens einem Aerogel oder Xerogel aus feuerfestem Material in der Porosität des Verbundmaterials man eine Imprägnierung durch eine Schmelzphase durchführt, die mehrheitlich Silizium und/oder Germanium legiert mit wenigstens einem Metall oder einem anderen Metalloid umfaßt.

11. Verfahren nach Anspruch 10, **dadurch gekennzeichnet, daß** man eine Schmelzphase verwendet, die mehrheitlich Silizium und/oder Germanium enthält, das legiert ist mit wenigstens einem Element, das gewählt ist unter Eisen, Kobalt, Titan, Zirkonium, Molybdän, Vanadium, Kohlenstoff und Bor.

12. Verfahren nach einem der Ansprüche 1 bis 11, **dadurch gekennzeichnet, daß** die Imprägnierung durch eine Phase vom Siliziumtyp ausgeführt wird, indem man jene lokal kontaktiert mit dem Verbundmaterial durch die Kapillarität mittels wenigstens eines Drains mit einem Ende, das in Kontakt mit der Schmelzphase vom Siliziumtyp in einem Schmelztiegel ist, und mit einem anderen Ende, das in Kontakt mit dem Verbundmaterial ist.

13. Verfahren nach Anspruch 12, **dadurch gekennzeichnet, daß** man wenigstens einen Drain in Form einer faserartigen Struktur verwendet.

14. Verfahren nach Anspruch 13, **dadurch gekennzeichnet, daß** man wenigstens einen Drain in Form eines Geflechts verwendet.

15. Verfahren nach einem der Ansprüche 13 und 14, **dadurch gekennzeichnet, daß** die faserartige Struktur aus Kohlenstoff oder Siliziumcarbid besteht.

16. Verfahren nach einem der Ansprüche 12 bis 15, **dadurch gekennzeichnet, daß** das Ende des Drains, das in Kontakt mit dem Material ist, in einem Blindloch angeordnet ist, das in dem Verbundmaterial ausgebildet ist.

17. Verfahren nach einem der Ansprüche 12 bis 16, **dadurch gekennzeichnet, daß** man auf der Oberfläche des Verbundmaterials, die in Kontakt mit dem Drain ist, eine Abscheidung eines Materials ausbildet, das geeignet ist, dem Abfließen der Phase vom Siliziumtyp auf dieser Oberfläche entgegenzuwirken.

18. Verfahren nach Anspruch 17, **dadurch gekennzeichnet, daß** die Abscheidung des Materials um den Bereich des Kontaktes zwischen dem Drain und dem Verbundmaterial ausgebildet wird.

19. Verfahren nach einem der Ansprüche 16 bis 18, **dadurch gekennzeichnet, daß** das Material, das geeignet ist, dem Fließen der Phase von Siliziumtyp entgegenzuwirken, auf Basis von Bornitrid ist.

20. Verfahren zur Verbindung von Teilen aus thermostrukturellem Verbundmaterial, umfassend das Aneinanderführen der jeweiligen Oberflächen der Teile, **dadurch gekennzeichnet, daß** man ein Verfahren nach einem der Ansprüche 1 bis 19 ausführt, mit Ausbildung eines Aerogels oder eines Xerogels aus feuerfestem Material in der Porosität des Verbundmaterials der Teile und in dem Zwischenraum oder der Verbindung zwischen den Oberflächen der Teile und mit Silizierung durch Imprägnierung durch eine Siliziumtypphase.

21. Verwendung eines Verfahrens nach einem der Ansprüche 1 bis 19 zur Verbesserung der tribologischen Eigenschaften eines Teils aus Kohlenstoff/Kohlenstoff-Verbundmaterial.

22. Verwendung eines Verfahrens nach einem der Ansprüche 1 bis 19 zur Verbesserung der Wärmeleitfähigkeit eines Teils aus Kohlenstoff/Siliziumcarbid-Verbundmaterial.

23. Verfahren nach einem der Ansprüche 1 bis 19 zur Abdichtung eines Teils aus thermostrukturellem Verbundmaterial.

24. Verfahren zur Abdichtung eines Teils aus Verbundmaterial nach Anspruch 23, **dadurch gekennzeichnet, daß** man nach Silizierung man eine Beschichtung der Oberfläche aus Keramikmaterial durchführt.

25. Teil aus thermostrukturellem, siliziertem Verbundmaterial, erhalten nach einem Verfahren nach einem der Ansprüche 1 bis 19, **dadurch gekennzeichnet, daß** es eine Elektrode eines lonen- oder Plasmamotors bildet.

26. Teil aus thermostrukturellem, silziertem Verbundmaterial, erhalten nach einem Verfahren nach einem der Ansprüche 1 bis 19, **dadurch gekennzeichnet, daß** es aus einer bipolaren Platte mit Brennstoffblöcken besteht.

27. Teil aus thermostrukturellem, siliziertem Verbundmaterial, **dadurch gekennzeichnet, daß** das thermostrukturelle silizierte Verbundmaterial eine Siliziumphase umfaßt, die wenigstens ein Nanonetzwerk aus feuerfestem Material vom Keramiktyp einschließt.

28. Teil nach Anspruch 27, **dadurch gekennzeichnet, daß** das Nanonetzwerk aus Siliziumcarbid besteht.

29. Teil nach einem der Ansprüche 27 und 28, **dadurch gekennzeichnet, daß** die Siliziumphase aus Silizium und/oder Germanium besteht.

30. Reibungsteil nach einem der Ansprüche 27 bis 29, **dadurch gekennzeichnet, daß** es ein Kohlenstoff/Kohlenstoff-Verbundmaterial umfaßt, dessen Porosität wenigstens teilweise durch eine Siliziumphase gefüllt ist, die ein Nanonetzwerk aus Siliziumcarbid einschließt.

31. Anordnung aus Rotor- und Statorscheiben einer Flugzeugbremse, **dadurch gekennzeichnet, daß** die Scheiben Reibungsteile gemäß Anspruch 30 sind.

32. Anordnung aus Rotor- und Statorscheiben einer Flugzeugbremse, **dadurch gekennzeichnet, daß** die Rotor- oder Statorscheiben Reibungsteile nach Anspruch 31 sind, während die anderen Scheiben aus nichtsiliziertem Kohlenstoff/Kohlenstoff-Verbundmaterial bestehen.
